(19) Europäisches Patentamt

European Patent Office

Office européen des brevets

(11) Veröffentlichungsnummer: **0 212 390 B1**

## (12) EUROPÄISCHE PATENTSCHRIFT

(45) Veröffentlichungstag der Patentschrift: **02.12.92**

(21) Anmeldenummer: **86110643.3**

(22) Anmeldetag: **01.08.86**

(51) Int. Cl.⁵: **H04N 5/782**

---

### (54) Videorecorder.

---

(30) Priorität: **08.08.85 DE 3528452**

(43) Veröffentlichungstag der Anmeldung:
**04.03.87 Patentblatt 87/10**

(45) Bekanntmachung des Hinweises auf die
Patenterteilung:
**02.12.92 Patentblatt 92/49**

(84) Benannte Vertragsstaaten:
**AT BE CH DE FR GB IT LI LU NL SE**

(56) Entgegenhaltungen:
**DE-A- 2 211 704**
**DE-A- 2 845 480**
**DE-B- 2 339 406**
**US-A- 4 531 166**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Kaaden, Jürgen, Dipl.-Ing.**
**Im Tannhörnle 10**
**W-7730 VS-Villingen(DE)**
Erfinder: **Link, Herrmann, Dipl.-Ing.**
**Augenmoosstrasse 10**
**W-7730 VS-Obereschach(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

EP 0 212 390 B1

**Beschreibung**

Bei handelsüblichen Videorecordern nach dem Schrägspurverfahren ist es bekannt, für Kopftrommel- und Magnetbandantrieb automatische Motorsteuerungen einzusetzen, die für eine Zusammenwirken beider Antriebe optimale Bezugslagebedingungen von Videoköpfen und Magnetband herstellen.

Diese Präzisionssteuerungen, auch Servosteuerungen genannt, werden von Referenzsignalen bestimmt, die als gemeinsame Quelle für die Verknüpfung der verschiedenen Regelanordnungen dienen.

Wesentliche Referenzquelle ist das vom Sender ausgegebene Vertikal-Synchronsignal. Es dient sowohl bei der Aufzeichnung, als auch bei der Wiedergabe (gelesen von separatem Kopf) als Referenz, auf die alle weiteren im Recorder erzeugten Hilfssynchronsignale abgestimmt sein müssen.

In der VHS-Norm ist z.B. festgelegt, daß das Magnetband eine Kopftrommel mit zwei Magnetköpfen mit etwas mehr als 180° umschlingt. Von jedem im Eingriff mit dem Magnetband stehenden Magnetkopf wird in einer Spur ein Halbbild in dem Umschlingungsbereich von 180° aufgezeichnet. In einem über 180° hinausgehender Bereich von etwa 3° werden weitere Zeilen geschrieben, so daß sich eine Überlappungszone zweier nebeneinander liegender Spuren bei der Aufnahme von etwa sechs Zeilen ergibt. Die Lage dieser Überlappungszone ist in ihrer mittleren Zuordnung auf 6,5 ± 1,5 Zeilen vor Eintreffen eines Vertikal-Synchronimpulses festgelegt. Sie ist auch die sogenannte Schaltposition für die Umschaltung der Magnetköpfe bei Wiedergabe. Für das Ein- bzw. Ausschalten der Magnetköpfe bei dieser Schaltposition sind z.B. am Umfang der Kopftrommel in einer festgelegten Zuordnung ein oder mehrere kleine Magnete angebracht, die in einer oder mehreren feststehenden Spulen am Anfang jeder Magnetspur Impulse generieren, aus denen die Kopfumschaltung abgeleitet wird. Da sowohl die Anordnung der Magnete als auch die Lage der Generatorspulen toleranzbehaftet sind, ist eine mechanische Verstellung z.B. der Spulen erforderlich, um die geforderter Zuordnung des Kopfumschaltimpulses zum Vertikalimpuls zu realisieren. Es sind auch optische Generatoren für die Erzeugung von Kopfumschaltimpulsen bekannt, die ebenso wie die elektromechanischen Generatoren justiert werden müssen. Es ist möglich, eine mechanische Justierung durch einstellbare elektrische Schaltungen zu ersetzen, z.B. durch Veränderung der Ablaufzeit von monostabilen Kippstufen.

Eine weitere Referenzquelle für die Bezugslagezuordnung zwischen Videokopf und Magnetband im Wiedergabebetrieb bilden zusätzlich zum Nutzsignal auf das Magnetband aufgezeichnete Synchronsignale. So wird z.B. nach der VHS-Norm auf einer Längsspur mit einem feststehenden separaten Kontrollkopf, der auch mit einem Audiokopf kombiniert sein kann, eine mit den Vertikalsynchronimpulsen des Videosignals synchronisierte Impulsfolge aufgezeichnet. Der Kontrollkopf weist mechanische Einstellvorrichtungen auf, mit denen der Kopf bei Abgleicharbeiten in der Fabrik oder im Servicefall parallel zur Bandkante für eine Einstellung der Synchronpulslage verschoben werden kann. Eine derartige Einstellung ist erforderlich, um eine Kompatibilität einzelner Recorder untereinander und damit auch der aufgenommenen Bänder zu gewährleisten. Kriterium für die Einstellung ist die optimale Spurlagenzuordnung der Magnetköpfe zu vorher aufgezeichneten Magnetspuren. Bei einer Einstellung wird dafür bei Wiedergabe eines Bezugsbandes die maximale FM-Amplitude des aufgezeichneten FM-modulierten Signales genommen. Dabei werden vorhandene Spurlagesteller (Trackingsteller) in einer vorgegebenen Sollstellung fixiert. Voraussetzung für die exakte Einstellung ist, daß vorher der Generator für die Kopfumschaltimpulse justiert worden ist. So wird der Servokreis für den Magnetbandantrieb bei Wiedergabe, dessen Phasensteuerung aus dem Vergleich der auf der Kontrollspur aufgezeichneten umgeformten Vertikalimpulse mit den Kopfumschaltimpulsen erfolgt, an die Kopftrommelumdrehungen angepaßt.

Die Einstellungen für den Kopfumschaltimpulsgenerator und für den Kontrollkopf in der Fabrik oder im Servicefall erfordern wegen der hohen erforderlichen Genauigkeit einen großen Meßgeräteaufwand und setzen qualifiziertes Bedienungspersonal voraus. Außerdem sind erfahrungsgemäß diese Einstellungen mit einer gewissen Einstellunsicherheit behaftet.

Der Erfindung liegt die Aufgabe zugrunde, die Einstellvorgänge so zu vereinfachen, daß mit geringem Meßgeräteaufwand eine optimale Einstellung erreicht werden kann.

Diese Aufgabe wird durch die im Anspruch 1 beschriebene Erfindung gelöst. Vorteilhafte Weiterbildungen sind in den abhängigen Ansprüchen beschrieben.

Aus der DE-A-2 211 704 ist eine Bandantriebsvorrichtung bekannt, bei der mittels abgespeicherter Korrektursignale, die verschiedenen Winkelstellungen der Bandantriebswelle zugeordnet und synchron mit der Umdrehung derselben abtastbar sind, Unterschiede zwischen dem Istwert der Bandgeschwindigkeit und dem Istwert der Bandantriebsdrehzahl kompensiert werden, indem die Korrektursignale den Regelabweichungssignalen hinzugefügt werden. Die Gewinnung der Korrektursignale (in einem Einstellvorgang bei Aufnahme und Wiedergabe eines frequenzkonstanten Signals) und deren Zuordnung erfolgen mittels eines mit der Bandantriebswelle gekoppelten Impulsgebers. Durch dieses dort offenbarte Verfahren läßt sich bei einem Videorecorder jedoch lediglich der Gleichlauf zwischen Aufnahme- und Wiedergabegeschwindigkeit verbessern.

Aus der DE-B2-2 339 406 ist ein Aufzeichnungs- und Wiedergabegerät für Videosignale bekannt, bei den eine Neuaufzeichnung sich störungsfrei an eine bestehende Aufnahme anschließen läßt. Hierzu wird zunächst das Servosystem für den Bandantrieb auf die Neuaufzeichnung vorbereitet, indem dieses mit den Bildsynchronimpulsen der Neuaufzeichnung synchronisiert wird, wobei von diesen Bildsynchronimpulsen und von den mit dem ortsfesten Kontrollkopf abgetasteten Synchronimpulsen der bestehenden Aufnahme Signale abgeleitet und abgespeichert werden. Diese Signale, die bei der Neuaufzeichnung einem ersten Steuereingang des Bandantriebs-Servosystems zugeführt werden, dienen diesem dabei als Soll-Signal, während die mit einem Tachogenerator des Bandantriebes erzeugten Tachosignale, die einem zweiten Steuereingang des Bandantriebs-Servosystems zugeführt werden, das Ist-Signal bilden. Eine Erzeugung und Abspeicherung von Korrektursignalen für eine Zeitkorrektur der Kopfumschaltimpulse und der mit dem Kontrollkopf abgetasteten Synchronimpulse, aufgrund einer Fehleinstellung von Kopfumschaltimpulsgeber und Kontrollkopf, ist dort ebenfalls nicht vorgesehen.

Im Prinzip besteht die Erfindung darin, einen sich durch die Montage von Kontrollkopf und Impulsgeber ergebenden mechanischen Ist-Stand nicht mehr zu verändern. Dadurch werden Signale abgegeben bzw. aufgenommen, deren zeitlicher Ablauf sich nicht mit den von der jeweiligen Systemnorm vorgegebenen Zeiten decken würden, so daß ein derartiges Gerät nicht kompatibel mit anderen Geräten wäre. In einer Servestellung, die durch Schalter oder Brücken während eines Einstellvorganges realisiert werden, wird der jeweilige zeitliche Fehler der Impulslage mit einer Referenzquelle verglichen und in einer Auswerteschaltung als Korrektursignal in einem nicht flüchtigen Speicher abgespeichert. Nach Aufhebung der Servestellung wird das jeweilige gespeicherte Korrektursignal den nicht eingestellten Signalen als Korrekturwert hinzugefügt.

Voraussetzung für einen derartigen Abgleichvorgang sind zwei Einstellungen, von denen sich eine Einstellung schon bei der Montage des Gerätes ohne besonderen Einstellvorgang automatisch durch Vorgabe einer festgelegten Anschraubposition für den Kopfumschaltimpulsgeber ergibt. Es müssen nämlich die vom Impulsgeber generierten Kopfumschaltimpulse zeitlich früher als 6,5 Zeilen vor Eintreffen der Vertikalimpulse aus dem Videosignal erzeugt werden, um eine Korrektur durch Verzögern der abgegebenen Impulse zu erreichen.

Der andere Einstellvorgang geschieht mit Hilfe eines in Videorecordern vorgesehenen Trackingreglers, mit dem das vom Kontrollkopf aus dem Vertikalsynchronsignal abgeleitete Signal so eingestellt werden muß, daß bei Wiedergabe optimale Spurabtastung erfolgt, d.h. als Indikator sich eine maximale abgegebene FM-Amplitude eines aufgezeichneten Signales ergibt. Anhand der Figuren soll die Erfindung beispielhaft näher erläutert werden.

Es zeigen:

Fig. 1    in einem Blockschaltbild eine elektrische Korrekturmöglichkeit fehleingestellter Impulsgeber in einem Servicefall

Fig. 2    in einer zeitlichen Zuordnung die Korrektur von Impulsen eines fehleingestellten Kopfumschaltimpulsgebers

Fig. 3    in einer zeitlichen Zuordnung die Korrektur von Impulsen eines fehleingestellten Kontrollkopfes bei Wiedergabe

Fig. 4    in einer zeitlichen Zuordnung die Korrektur von Impulsen, die bei Aufzeichnung einem fehleingestellten Kontrollkopf zugeführt werden.

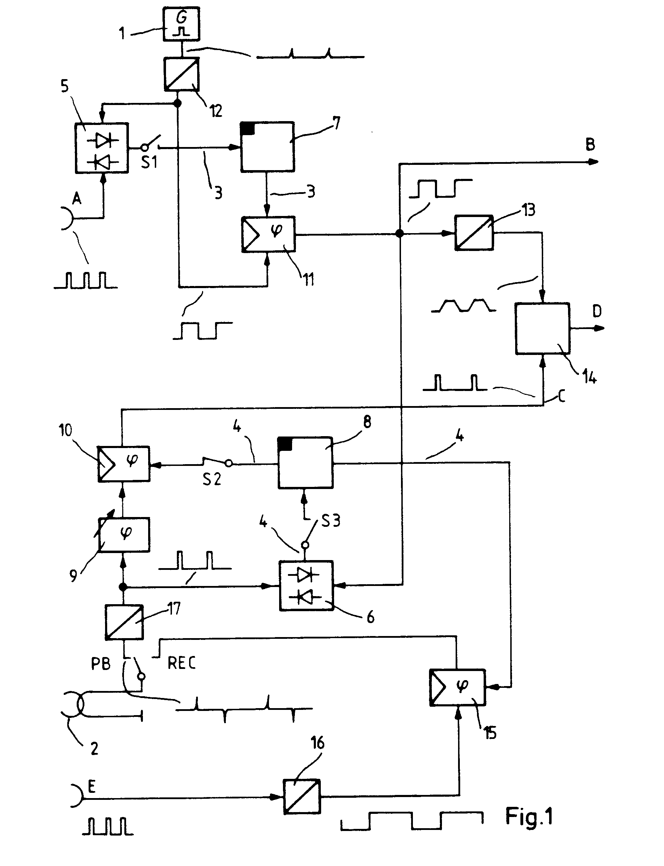

Fig. 1 zeigt in einem Blockschaltbild eine elektrische Korrekturmöglichkeit fehleingestellter Impulsgeber in einem Servicefall.

Die Serviceeinstellungen erfolgen bei Wiedergabe eines Bezugsbandes, welches exakt nach Norm aufgenommen worden ist. Für die Einstellungen sind bestimmte Verbindungen erforderlich, die durch die Schalter S1,S2 und S3 hergestellt werden. Für die im Einstellablauf erste Einstellung ist Schalter S1 geschlossen, Schalter S2 und S3 sind geöffnet.

Im Impulsgeber 1 werden durch die Rotation einer nicht dargestellten Kopftrommel Impulse erzeugt, die einerseits für die Synchronisation der Servosteuerungen und andererseits für die Umschaltung der in der Kopftrommel angeordneten Magnetköpfe als Referenz dienen. Es ist z.B. nach der VHS-Norm festgelegt, daß die Kopfumschaltung, d.h. die Abgabe eines Impulses bei Wiedergabe 6,5 Zeilen vor Eintreffen eines aus der aufgezeichneten FM wiedergewonnenen Vertikalsynchronimpulses mit einer Toleranz von ± 1,5 Zeilen erfolgen muß. Für die Ermittlung der Fehleinstellung des nicht einstellbaren Impulsgebers 1 werden die aus der FM des abgespielten Bezugsbandes wiedergewonnenen Vertikalsynchronimpulse an den Eingang A einer Vergleichsschaltung 5 gelegt und mit den aus dem Impulsgeber 1 gelieferten, im Wandler 12 umgeformten Kopfumschaltsignalen in ihrer Phasenlage zueinander verglichen. Aus der ermittelten Abweichung wird ein Korrektursignal 3 abgeleitet, welches bei dem für diese Serviceeinstellung geschlossenen Schalter S1 in dem Speicher 7 abgelegt wird. Voraussetzung für die Ermittlung des Korrektursignales 3 ist eine spurgenaue Abtastung der vorher aufgezeichneten Magnetspuren durch die Magnetköpfe. Dieses wird durch Einstellung des Trackingstellers 9 auf optimale FM-Ausbeute des aufgezeichneten Videosignales erreicht.

Nachdem das Korrektursignal 3 in dem nicht flüchtigen Speicher 7 abgelegt ist, wird der Schalter S1 geöffnet und der Einstellvorgang für die Korrektur des Kopfumschaltzeitpunktes ist abgeschlossen. Alle durch Impulsgeber 1 generierten Kopfumschaltsignale werden jetzt mit Hilfe der im Speicher 7 abgelegten Korrektursignale 3 in dem Phasenstellglied 11 zeitlich um den Fehlbetrag der mechanischen Voreinstellung verzögert ausgegeben. Speicherung und Verzögerung kann in analoger oder auch in digitaler Form erfolgen. Die verzögerten Kopfumschaltsignale aus dem Phasenstellglied 11 werden am Ausgang B für die Kopfumschaltung zur Verfügung gestellt. Außerdem dienen sie für die Erzeugung der Phasenfehlerspannung für die Servosteuerungen des Magnetbandantriebes bei Wiedergabe. Dieser Zweig wird durch den Wandler 13, in welchem das rechteckförmige Signal in ein Trapezsignal umgeformt wird und durch die Sample-and-Hold-Schaltung 14 gebildet, an deren Ausgang D eine Phasenfehlerspannung abgegeben wird.

Für die Korrektur der vom nicht justierten Kontrollkopf 2 abgegebenen Impulse muß Schalter S3 geschlossen werden, während Schalter S1 und S2 geöffnet sind. Das Phasenstellglied 10 wird auf Null gesetzt z.B. an einem nicht gezeichneten Reset-Eingang. Mit dem Trackingsteller 9 wird bei Wiedergabe des Bezugsbandes noch einmal optimale Spurabtastung, d.h. maximale FM eingestellt, um sicherzustellen, daß die Servosysteme in der richtigen Zuordnung funktionieren. Das von dem Kontrollkopf 2 abgetastete pulsförmige Kontrollsignal wird im Wandler 17 in eine Impulsfolge in sogenannte Tracking-Vertikal-Impulse umgewandelt, die an den Eingang C der Sample-and-Hold-Schaltung 14 für die Phasenregelung des Magnetbandantriebes gegeben werden.

In der Vergleichsschaltung 6 werden die ankommenden Tracking-Vertikal-Impulse mit den von Phasenstellglied 11 gelieferten bereits korrigierten Kopfumschaltsignalen in der Phase verglichen. Bei abweichender Phasenlage der Vorderflanken beider Folgen wird ein Korrektursignal 4 erzeugt, welches in den nicht flüchtigen Speicher 8 eingespeichert wird. Damit ist der Einstellvorgang für die Korrektur der Kontrollkopfsignale d.h. der Tracking-Vertikal-Impulse abgeschlossen. Schalter S3 wird geöffnet und Schalter S2, der nur für die Serviceeinstellung geöffnet war, wird geschlossen. Gleichzeitig mit dem Schließen von Schalter S2 wird der Trackingsteller 9, der von Hand eingestellt werden kann oder auch als elektronisch steuerbares Regelglied ausgeführt sein kann, auf Null gesetzt. Durch das im Speicher 8 abgespeicherte Korrektursignal 4 erfolgt bei geschlossenem Schalter S2 die Trackingkompensation der vom Kontrollkopf 2 zeitlich falsch gelieferten Impulse mit Hilfe des Phasenstellgliedes 10. Mit Trackingregler 9 kann eine individuelle Trackingeinstellung bei Wiedergabe von Aufnahmen fremder Recorder erfolgen.

Auch bei der Aufnahme muß bei mechanisch nicht eingestelltem Kontrollkopf wegen der Kompatibilität einzelner Recorder untereinander diese Fehleinstellung kompensiert werden. Um dieses zu erreichen, wird das in Speicher 8 gespeicherte Korrektursignal 4 bei der Erzeugung der aus den vom Sender kommenden Vertikal-Synchronimpulsen abgeleiteten Kontrollimpulssignalfolge mit berücksichtigt. Das an Eingang E anstehende Vertikal-Synchronsignal wird im Wandler 16 in eine rechteckförmige Impulsfolge umgewandelt, deren zeitliche Ausgabe an den Kontrollkopf 2 durch das Phasenstellglied 15 in Abhängigkeit des im Speicher 8 abgespeicherten Korrektursignales 4 erfolgt.

Die vorbeschriebenen Einstellungen wurden anhand eines Blockschaltbildes als Ausführungsbeispiel mit bekannten Bauelementen beschrieben. Es ist aber auch möglich, mit Hilfe eines Mikrocomputers oder Mikroprozessors die beschriebenen Abläufe in einer Einstellroutine zu realisieren und große Teile der Bauelemente in einem derartigen Computer oder Prozessor zu integrieren. Dabei ist es möglich, den Einstellvorgang mit Hilfe eines Ablaufgenerators noch weiter zu automatisieren, indem z.B. die Trackingeinstellung durch Trackingsteller automatisch auf ein Optimum durch Auswertung der maximalen FM gesteuert wird und mehrere Meßvergleiche durch fortlaufende Messung mit einer Speicherung in fest vorgegebenen Schritten erfolgt.

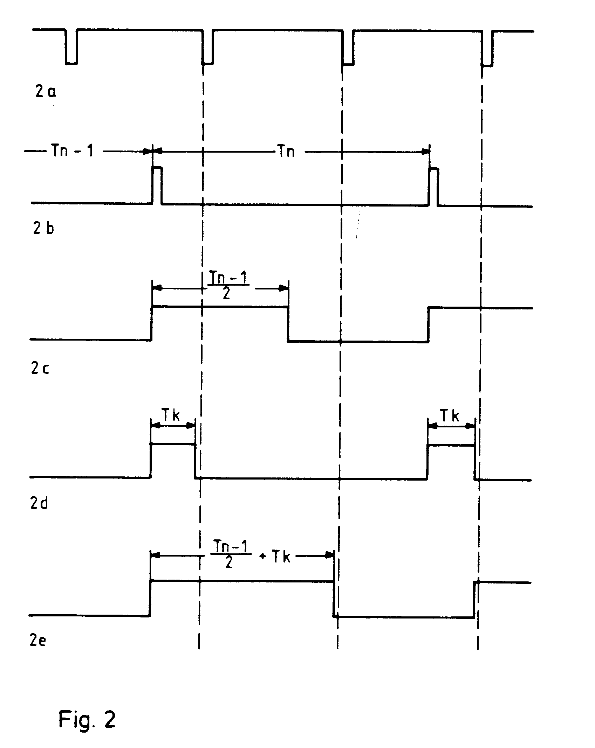

Fig. 2 zeigt in einer zeitlichen Zuordnung die Korrektur von abgegebenen Impulsen eines fehleingestellten Kopfumschaltimpulsgebers.

2a zeigt Vertikalsynchronimpulse, die bei Wiedergabe eines bespielten Bezugsbandes aus dem in FM aufgezeichneten Videosignal zurückgewonnen worden sind.

2b zeigt durch die Rotation der Kopftrommel im Impulsgeber 1 erzeugte Impulse, die wegen fehlender Justage des Impulsgebers willkürlich, jedoch wenigstens 6,5 Zeilen vor Eintreffen eines Vertikal-Synchronimpulses generiert werden. Tn ist die Zeit für eine Umdrehung der Kopftrommel, Tn-1 die Zeit für die Umdrehung n-1.

2c zeigt das aus den Impulsen des Impulsgebers 1 umgewandelte Kopfumschaltsignal ohne Zeitkorrektur.

2d zeigt das Korrektursignal Tk, welches aus dem Vergleich des Kopfumschaltsignales nach 2c mit den Vertikal-Synchronimpulsen nach 2a in der Vergleichsschaltung 5 erzeugt wird. Die hintere abfallende Flanke von Tk liegt 6,5 Zeilen vor den Vertikal-Synchronimpulsen.

2e zeigt das Kopfumschaltsignal nach 2c, welches mit dem in 2d gezeigten Korrektursignal Tk zeitlich in dem Phaseneinstellglied 11 so verschoben ist, daß die Flanken des korrigierten Kopfumschaltsignales exakt 6,5 Zeilen vor Eintreffen eines Vertikal-Synchronimpulses erscheinen.

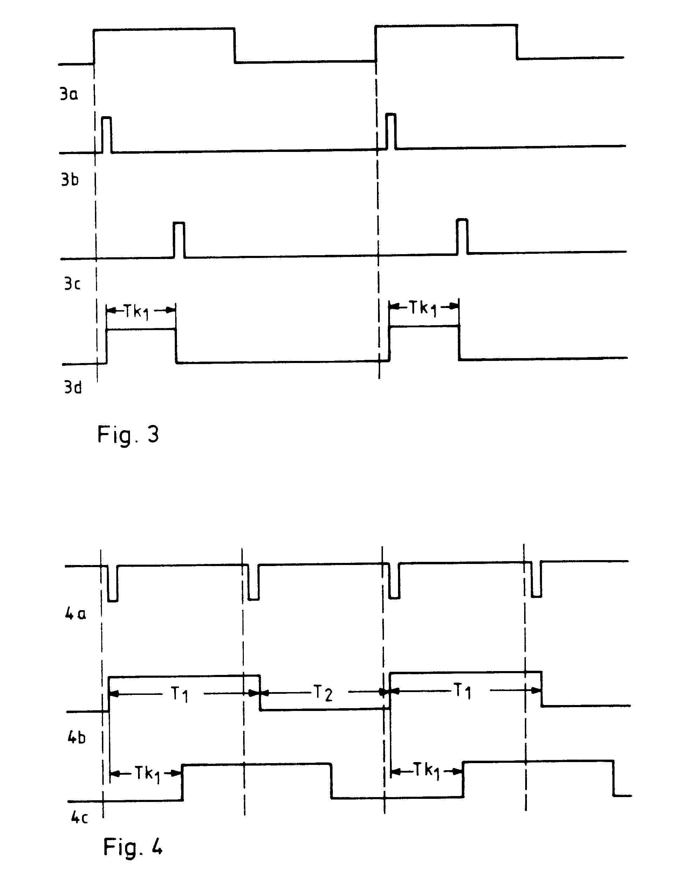

Fig. 3 zeigt in einer zeitlichen Zuordnung die Korrektur von abgegebenen Impulsen eines fehleingestellten Kontrollkopfes 2 bei Wiedergabe eines bespielten Bezugsbandes.

3a zeigt das nach Fig. 2 korrigierte Kopfumschaltsignal an einem Eingang der Vergleichsschaltung 6.

3b zeigt die mit Trackingstellern 9 einstellbare Soll-Lage der Synchronimpulse am Eingang C der Sample-and-Hold-Schaltung 14 6,5 Zeilen nach der Flanke des Kopfumschaltsignales.

3c zeigt eine beliebige Ist-Lage abgegebener Synchronimpulse durch mechanische Fehleinstellung des Kontrollkopfes 2 an einem zweiten Eingang der Vergleichsschaltung 6.

3d zeigt das zwischen 3a und 3c ermittelte Korrektursignal Tk1, welches in Speicher 8 abgespeichert wird und zur Einstellung des Phasenstellgliedes 10 bei der Wiedergabe dient, so daß die an Eingang C der Sample-and-Hold-Schaltung 14 angelegten Impulse der Soll-Lage nach Fig. 3b entsprechen.

Fig. 4 zeigt in einer zeitlichen Zuordnung die Korrektur einer Impulsfolge, die bei Aufzeichnung einem fehleingestellten Kontrollkopf 2 zugeführt wird.

Fig. 4a zeigt das an Eingang E vom Sender gelieferte Vertikal-Synchronsignal.

Fig. 4b zeigt die Soll-Lage des Aufsprechsignals für einen mechanisch optimal eingestellten Kontrollkopf. Die Zeit T1 ist dem Magnetkopf 1 und die Zeit T2 dem Magnetkopf 2 zugeordnet.

4c zeigt das korrigierte Aufsprechsignal für den Synchronkopf für den nach Fig. 3d ermittelten und in Speicher 8 abgepeicherten Korrekturwert Tk1.

## Patentansprüche

1. Videorecorder mit einer von einem Magnetband teilweise umschlungenen, Magnetköpfe tragenden rotierenden Kopftrommel, mit einem durch die Rotation der Kopftrommel Signale erzeugenden Impulsgeber (1) und einem ein Synchronsignal aufzeichnenden oder wiedergebenden Kontrollkopf (2), bei dem in einem Service-Einstell-Vorgang zeitliche Signalabweichungen, bedingt durch mechanische Fehleinstellung, insbesondere Positionierungstoleranzen von Impulsgeber (1) und/oder Kontrollkopf (2) gegenüber den vom jeweiligen System vorgeschriebenen Werten in einer Vergleichsschaltung (5,6) ausgewertet, als Korrektursignal (3,4) in einem nicht flüchtigen Speicher (7,8) gespeichert und nach Beendigung des Einstellvorganges bei Aufnahme und Wiedergabe als Korrektursignal (3,4) den vom Impulsgeber (1) gelieferten und/oder vom Kontrollkopf (2) gelieferten oder zu liefernden Signalen zur Zeitkorrektur derselben hinzugefügt werden.

2. Videorecorder nach Anspruch 1, **dadurch gekennzeichnet,** daß der Service-Einstell-Vorgang bei Wiedergabe eines Bezugsbandes erfolgt.

3. Videorecorder nach Anspruch 1 oder Anspruch 2, **dadurch gekennzeichnet,** daß im Ablauf des Service-Einstell-Vorganges zuerst eine Korrektur der Signale des Signale erzeugenden Impulsgebers (1) erfolgt.

4. Videorecorder nach einem der Ansprüche 1 - 3, **dadurch gekennzeichnet,** daß der Service-Einstellvorgang in einem Mikroprozessor oder Mikrocomputer durchgeführt wird.

5. Videorecorder nach Anspruch 4, **dadurch gekennzeichnet,** daß der Mikroprozessor oder Mikrocomputer auch in den Servo- und Ablaufsteuerungen eingesetzt ist.

6. Videorecorder nach Anspruch 4 oder Anspruch 5, **dadurch gekennzeichnet,** daß der Mikroprozessor oder Mikrocomputer in den Service-Einstell-Vorgang durch einen Puls oder ein statisch wirkendes Signal in eine Einstellroutine gebracht wird.

7. Videorecorder nach einem der Ansprüche 4 - 6, **dadurch gekennzeichnet,** daß der Service-Einstell-Vorgang durch einen Ablaufgenerator steuerbar ist.

## Claims

1. Video recorder with a rotating head drum partly wrapped around with a magnetic tape and bearing magnetic heads, with a pulse generator (1) generating signals due to the rotation of the head drum and a monitor head (2) recording or reproducing a sync signal, in which in a service setting operation signal differences in time, caused by wrong mechanical setting, in particular positioning differences of pulse generator (1) and/or monitor head (2) compared with the values prescribed by the particular system, are evaluated in a comparison circuit (5, 6), stored as a correction signal (3, 4) in a non-volatile storage means (7, 8) and after completion of the setting operation added during recording or reproduction as a correction signal (3, 4) to the signals supplied by the pulse generator (1) and/or supplied or to be supplied by the monitor head (2) for the time correction of the latter.

2. Video recorder according to claim 1, **characterised in that** the service setting operation takes place during reproduction of a reference magnetic tape.

3. Video recorder according to claim 1 or claim 2, **characterised in that** in the course of the service setting operation there takes place first of all a correction of the signals of the pulse generator generating signals (1).

4. Video recorder according to any one of claims 1 - 3, **characterised in that** the service setting operation is carried out in a microprocessor or microcomputer.

5. Video recorder according to claim 4, **characterised in that** the microprocessor or microcomputer is also used in the servo and sequence controls.

6. Video recorder according to claim 4 or claim 5, **characterised in that** the microprocessor or microcomputer is brought into the service setting operation by a pulse or a statically acting signal into a setting routine.

7. Video recorder according to any one of claims 4 to 6, **characterised in that** the service setting operation is controllable by a sequential generator.

**Revendications**

1. Magnétoscope avec un tambour des têtes rotatif, qui porte des têtes magnétiques et qui est partiellement entouré par une bande magnétique, avec un générateur d'impulsions (1) qui produit des signaux à cause de la rotation du tambour des têtes et une tête de contrôle (2) qui enregistre ou reproduit un signal de synchronisation, dans lequel des déviations de signal dans le temps, qui sont déterminées par un mauvais réglage mécanique, en particulier les tolérances de positionnement du générateur d'impulsions (1) et/ou de la tête de contrôle (2) par rapport aux valeurs prédéfinies par le système respectif, sont exploitées dans un circuit comparateur (5, 6), sont mémorisées comme signal de correction (3, 4) dans une mémoire non volatile (7, 8) et sont ajoutées, après achèvement de l'opération de réglage lors de l'enregistrement et de la lecture, comme signal de correction (3, 4) aux signaux donnés ou qui doivent être donnés par le générateur d'impulsions (1) et/ou par la tête de contrôle (2) pour la correction temporelle de ceux-ci.

2. Magnétoscope selon la revendication 1, **caractérisé en ce** que l'opération de réglage de service se fait lors de la lecture d'une bande de référence.

3. Magnétoscope selon la revendication 1 ou la revendication 2, **caractérisé en ce** qu'une correction des signaux du générateur d'impulsions (1) qui produit des signaux est tout d'abord effectuée lors du déroulement de l'opération de réglage de service.

4. Magnétoscope selon l'une des revendications 1 à 3, **caractérisé en ce** que l'opération de réglage de service est effectuée dans un microprocesseur ou un micro-ordinateur.

5. Magnétoscope selon la revendication 4, **caractérisé en ce** que le microprocesseur ou le micro-ordinateur est également utilisé dans les servocommandes et commandes de déroulement.

6. Magnétoscope selon la revendication 4 ou la revendication 5, **caractérisé en ce** que le microprocesseur ou le micro-ordinateur est mis en opération de réglage de service par une impulsion ou un signal à effet statique dans une routine de réglage.

7. Magnétoscope selon l'une des revendications 4 à 6, **caractérisé en ce** que l'opération de réglage de service peut être commandée par un générateur de déroulement.

Fig.1

Fig. 2

3a

3b

3c

3d

Fig. 3

Tk$_1$

Tk$_1$

4a

4b

T$_1$ T$_2$ T$_1$

4c

Tk$_1$ Tk$_1$

Fig. 4